# EUROPÄISCHE PATENTSCHRIFT

(11) **EP 0 484 278 B1**
(45) Veröffentlichungstag und Bekanntmachung des Hinweises auf die Patenterteilung: **12.04.1995**
(21) Anmeldenummer: 91810819.2
(22) Anmeldetag: 23.10.1991
(51) Int. Cl.: G01N 35/08

(54) **Vorrichtung zur Aufbereitung oder Vorbereitung von flüssigen Proben für eine chemische Analyse**
Device for preparing liquid samples for chemical analysis
Appareil de préparation d'échantillons liquides pour l'analyse chimique

(30) Priorität: 01.11.1990 CH 3467/90
(43) Veröffentlichungstag der Anmeldung: 06.05.1992
(73) Patentinhaber: CIBA-GEIGY AG, 4002 Basel (CH)
(72) Erfinder: Manz, Andreas, Dr., CH-4056 Basel (CH)

(56) Entgegenhaltungen:
- EP-A- 0 107 631
- GB-A- 2 097 692

## Beschreibung

Die Erfindung betrifft eine Vorrichtung zur Aufbereitung oder Vorbereitung von flüssigen Proben für eine - vorzugsweise quantitative - chemische Analyse gemäss Oberbegriff des Patentanspruchs 1.

Eine derartige Vorrichtung ist in unterschiedlichen Ausführungsformen bekannt und hat sich vor allem bei der Fliess-Injektions-Analyse bewährt. Je nach Art des Detektors und einer daran angeschlossenen Auswerteeinheit und Auswertemethoden erhält man Angaben über den pH-Wert, die Leitfähigkeit, spektralfotometrische Kenngrößen, andere physikalische oder chemische Kenngrößen oder auch einzelne Stoffe. Insbesondere erlaubt die Kenntnis solcher Größen auch Rückschlüsse auf Konzentrationen der Probe oder in der Probe. Vor allem der Wunsch nach einem möglichst geringem Probenvolumen bei gleichzeitig hoher Genauigkeit und Reproduzierbarkeit der Analyse wird durch die Fliess-Injektions-Analyse, kurz FIA, erfüllt. Die Probe kann dabei portionsweise dem Trägermedium zugesetzt werden, um von diesem zum Detektor transportiert zu werden. Verfeinerungen dieses Verfahrensprinzips erlauben es auch, die Probe vor dem Einspritzen oder Einführen in das Trägermedium zunächst zu verdünnen, mit weiteren Reagenzchen zu versetzen und zu vermischen oder zusätzliche Reaktionen und Analysen, beispielsweise Chromatographie oder Elektrophorese durchzuführen.

Solche möglichst kontinuierlich ablaufenden Durchfluß-Analysen werden vielfältig angewendet. Dabei können sie nicht nur für Wasseruntersuchungen im Umweltschutz, sondern auch zur Kontrolle von Herstellungsverfahren herangezogen werden. Aus der EP-A-243 310 ist beispielsweise ein Verfahren zur Steuerung und Optimierung bei der Herstellung von Textilveredlungsmitteln und Textilausrüstungsmitteln und deren Zwischenprodukten unter Anwendung der Fliess-Injektions-Analyse beschrieben.

Nachteilig ist jedoch bei diesen Analysen vor allem der Platzbedarf der einzelnen Bauteile und Aggregate, vor allem der mechanischen Bauteile, wie z.B. der bisher üblichen Kolbenpumpen, Injektionsventile und dergleichen. Diese Teile und die Zuführungen zu ihnen sowie die Ableitungen von ihnen verbrauchen aufgrund des Eigenvolumens einen großen Teil von Probenflüssigkeiten und Trägerflüssigkeiten und verursachen aufgrund der entsprechend langen Leitungen zu lange Transportzeiten.

Eine Vorrichtung der gattungsbildenden Art ist beispielsweise aus der EP-A-0,107,631 bekannt Die dort beschriebene Vorrichtung zur Aufbereitung oder Vorbereitung von flüssigen Proben für eine chemische Analyse ist mit Zuführkanälen oder -leitungen zu einer Analysevorrichtung oder einem Detektor ausgestattet, wobei wenigstens eine Leitung für ein Trägermedium und wenigstens eine weitere Leitung zur Zuführung einer zu untersuchenden Probe vorgesehen sind, die in die Zuleitung für das Trägermedium mündet. Die Vorrichtung ist aus einem Satz plattenförmiger Bauteile modular zu einem Stapel zusammensetzbar. Dabei enthalten die Bauteile jeweils Leitungsstücke, Verzweigungen und/oder Mündungen. Zum Transport des Trägermediums und der Probe ist die Vorrichtung über ansteckbare Leitungen mit externen Pumpen, beispielsweise mit peristaltischen Pumpen verbunden. Zwar kann diese bekannte Vorrichtung bis zu einem gewissen Grad verkleinert werden, und können auf diese Weise die Volumina der Kanäle, Leitungsstücke und Mündungen, welche von der Trägerflüssigkeit und der Probe durchströmt werden, reduziert werden, jedoch sind dieser Reduktion durch die Grösse und das Pumpvolumen der externen Pumpen Grenzen gesetzt. So mag zwar die aus stapelbaren Bauteilen zusammengesetzte bekannte Vorrichtung auch für den Einsatz kleiner Flüssigkeitsvolumina ausgelegt sein. Durch die zwingende Verwendung externer Pumpen mit im Vergleich zu der bekannten Vorrichtung sehr grossen Volumina können die erforderlichen Mengen an Trägerflüssigkeit und Reagenzien aber dennoch nicht reduziert werden. Die grossen Flüssigkeitsmengen, die mit Hilfe externer Pumpen durch die bekannte Vorrichtung gepumpt werden müssen, resultieren wiederum in relativ langen Analysezeiten.

Der Erfindung liegt deshalb die Aufgabe zugrunde, die Analysenzeit auch bei Betrieb von großen Anlagen mit vielen Meßstellen erheblich zu vermindern und die Menge an Trägerflüssigkeit und Reagenzchen wenigstens um eine Größenordnung, bevorzugt um zwei bis fünf Größenordnungen zu verringern. Zusätzlich soll ein einfacher Aufbau der Vorrichtung ermöglicht werden.

Die Lösung dieser Aufgaben besteht in einer Vorrichtung, welche die im Kennzeichnenden Teil des Patentanspruchs 1 angeführten Merkmale aufweist. Solche plattenförmigen Bauteile können relativ einfach miniaturisiert werden und erlauben eine wichtige Ausgestaltung der Erfindung dahingehend, daß die Bauteile zum Aufbau unterschiedlicher Fliess-Systeme und -leitungen in unterschiedlicher Anzahl und/oder Reihenfolge und/oder gegenseitiger Orientierung stapelbar und in Gebrauchsstellung dicht verbunden sind. Die so gebildeten Fliess-Systeme für die Fliess-Injektions-Analyse können ebensoviel wie herkömmliche derartige Systeme leisten. Bei z.B. maßstabsgetreu zehnfach verkleinertem FIA-System werden etwa tausend Mal weniger Reagenzien verbraucht und dennoch wird die Analyse etwa zehnmal schneller. Insbesondere die Probenaufbereitung am Ort der Probenentnahme spart Transportwege. So können innerhalb solcher plattenförmiger Bauteile Transportwege von z.B. nur 5 mm herkömmlichen Leitungen mit bis zu 200m Länge gegenüberstehen. Entsprechend schneller können auch elektrische oder optische Signale transportiert werden.

Dabei kann jeweils ein plattenförmiges Bauteil, zusätzlich zur integrierten Pumpe, wenigstens, ein Ventil, oder eine Mischkammer, oder ein Pumpenelement, oder Extraktoren, oder Reaktoren, oder Verbindungsstücke und/oder Detektorzellen, insbesondere fotooptische oder chromatographische Detektorzellen oder dergleichen, oder ein anderes Funktionsteil der Vorrichtung aufweisen. Somit lassen sich solche Funktionsteile problemlos innerhalb des Stapels von Bauteilen an einer erforderlichen Stelle einordnen und unterbringen.

Das an dem plattenförmigen Bauteil vorgesehene Funktionsteil ist dabei zweckmäßigerweise in dessen Zentrum angeordnet und Zu- und Abflußkanäle oder dergleichen Durchführöffnungen können dem Rand oder der Peripherie des Bauteiles näher liegen. Dies hat den Vorteil, daß vor allem die Zuleitungen problemlos herangeführt werden können und Zu- und Abflüsse leicht untergebracht werden können, ohne eventuell Komplikationen mit Kreuzungsstellen zu verursachen. Darüberhinaus ergibt sich dadurch auf einfache Weise die Möglichkeit, bei gleichbleibender Anordnung des Funktionsteiles durch verdrehte Zuordnung weiterer Bauteile eine abgewandelte Anordnung der Zuleitungen zu bewirken. Dies verbessert die Möglichkeit, mit relativ wenig Bauteilen dennoch unterschiedlichsten Anforderungen solcher Vorrichtungen gerechtzuwerden.

Der Anschluß der Vorrichtung an ein Steuergerät kann in einfacher Weise über elektrische Kabel, insbesondere für Detektor, Pumpe und/oder Ventile, über hydraulische und/oder pneumatische Schlauchleitungen, z.B. für Pumpen oder Ventile, oder über Reagenziuführungs-Schläuche und optische Fasern, insbesondere zu einem auf der Durchleuchtung mit Licht basierenden Detektor, erfolgen. All dies wird durch die erfindungsgemäße Stapelung von plattenförmigen Bauteilen mit entsprechenden öffnungen und Kanalabschnitten ermöglicht, so daß die gesamte Vorrichtung sehr platzsparend und mit geringem Eigenvolumen ausgebildet sein kann.

Dabei ist es in vorteilhafter Weise möglich, daß wenigstens eine Pumpe innerhalb des oder der Bauteile angeordnet ist. Die innerhalb eines Bausatzes vorzusehende Pumpe ist durch eine zwischen zwei Bauteilen angeordnete Membran gebildet, welche von einer Seite her mittels Druck und/oder Unterdruck auslenkbar ist und auf ihrer anderen Seite Saug- und Druckleitungen aufweist. Durch einen Teil der Bauteile und darin vorgesehene Kanäle kann also eine solche Membrane in Schwingungen versetzt werden, indem sie abwechselnd durch Druck in einer Richtung und durch Unterdruck in der Gegenrichtung ausgelenkt wird. Eine solche oszillierende Membran kann andererseits auf der diesem Auslenkungsmechanismus gegenüberliegenden abgewandten Seite die erforderlichen Pumpvorgänge durchführen. Dabei wird nur ein sehr geringes Volumen benötigt, da ein mechanischer Antrieb entfallen kann.

Für die Stapelung der einzelnen Bauteile in unterschiedlicher Reihenfolge und/oder Winkelposition zueinander ist es vorteilhaft, wenn die einzelnen Bauteile Zentrier- oder Verbindungslochungen oder Aussparungen an jeweils übereinstimmender Stelle haben und jedes Bauteil entlang seinem Umfang mehrere, beispielsweise vier Zentrier- oder Verbindungslochungen für Befestigungsmittel aufweist, die jeweils um einen übereinstimmenden Winkel gegeneinander versetzt sind und auf übereinstimmendem Abstand vom Zentrum des Bauteiles angeordnet sind. Dabei haben mehrere solche Verbindungslochungen den Vorteil, daß die sie durchsetzenden Verbindungsmittel eine gleichmäßige Druckkraft auf die einzelnen platten- oder scheibenförmigen Bauteile ausüben können, so daß diese in Gebrauchsstellung dicht aufeinanderliegen.

Die Außenkonturen der Bauteile können übereinstimmen und von gleicher Größe sein, so daß die Bauteile deckungsgleich sind. Dies verbessert die Stapelbarkeit und die Möglichkeit der Miniaturisierung.

Beispielsweise kann die Außenkontur der Bauteile kreisrund oder quadratisch sein. Dies erleichtert die Zuordnung einzelner-Bauteile auch in unterschiedlicher Winkelposition zueinander, ohne daß dabei die Deckungsgleichheit verlorengeht. Selbstverständlich sind aber auch andere regelmäßige Vielecke, beispielsweise Sechsecke als Grundriß für die Bauteile möglich, um den vorerwähnten Vorteil zu erlangen.

Eine zweckmäßige Ausführungsform der Erfindung kann vorsehen, dass die plattenförmigen Bauteile Glas-, Kunststoff- oder Metallscheiben, insbesondere aus Edelstahl, sind. Solche Bauteile sind einfach und preiswert herstellbar. Brauchbare Ergebnisse sind dabei z.B. mit Scheiben möglich, deren Durchmesser etwa 5 cm beträgt, jedoch sind auch beliebige andere Größen verwendbar.

Eine weitere Miniaturisierung läßt sich erreichen, wenn die plattenförmigen Bauteile chipartige, von einem Kristall abgetrennte Scheiben sind. Solche Scheiben können beispielsweise eine Seitenabmessung von 2 bis 20 mm haben. Die Durchflußöffnungen, -kanäle und/oder Verbindungslochungen und/oder Aussparungen für Funktionsteile können dabei in die Bauteile eingeäzt sein. Es ist bekannt, daß mit der Äztechnik kleinste öffnungen und Konfigurationen von Kanalabschnitten und dergleichen hergestellt werden können, so daß die angestrebte Miniaturisierung mit den daraus resultierenden Vorteilen für eine Verminderung des erforderlichen Probevolumens in hohem Maße erreicht werden kann.

Die einander gegenüberliegenden Oberflächen der plattenförmigen Bauteile sind planparallel und derart eben, daß sie in geschichteter und verbundener Gebrauchsstellung die Ränder der Durchflußöffnungen oder dergleichen oder an der Oberfläche einseitig offener Kanalabschnitte oder auch öffnungen von Funktionsteilen abdichten. Dies erleichtert die Stapelung und den Zusammenbau der einzelnen Bauteile, weil keine speziellen Dichtungen erforderlich sind. Denkbar ist jedoch auch, daß die eine oder andere Scheibe oder das eine oder andere plattenförmige Bauteil als Dichtelement zusätzlich beispielsweise im Bereich einer Pumpe oder eines Ventiles in den Stapel eingefügt ist.

Zur Bildung eines Ventiles kann eine ein Bauteil durchsetzende Durchflußöffnung zumindest bereichsweise über die Dicke des Bauteiles trichterförmig sein, und in dem sie trichterförmig verjüngenden Abschnitt ein kugeliges Ventilelement enthalten. Wird nun dieser Bereich von einem überdruck beaufschlagt, kann die Kugel in der Art eines Rückschlagventiles den Durchfluß verschließen. Wird jedoch die Druckrichtung umgedreht, kann das Ventil geöffnet werden.

Zum dichten Zusammendrücken der gestapelten plattenförmigen Bauteile können die Verbindungslochungen durchsetzende Gewindestäbe oder Schrauben vorgesehen sein.

Der Bausatz kann schließlich noch Abschlußscheiben mit Anschlüssen zu den Durchflußkanälen aufweisen, die unter Umständen eine größere Dicke und auch eine größere Außenabmessung haben können, damit übliche Schläuche an die miniaturisierten Durchflußkanäle adaptiert werden können.

Vor allem bei Kombination einzelner oder mehrerer der vorbeschriebenen Merkmale und Maßnahmen ergibt sich eine Vorrichtung, mit der je nach Anforderungen auf kleinstem Raume Fliess-Injektions-Analysen durchgeführt werden können, für die sehr wenig Reagenzchen benötigt werden und die dennoch sehr schnell durchführbar sind, ohne daß die Genauigkeit darunter leidet. Da auch der Platzbedarf einer Vorrichtung sehr gering ist, kann sie in vielen Fällen möglichst nah an der Stelle untergebracht werden, wo eine solche Analyse erforderlich ist, sei es im Umweltschutz, sei es zur überwachung von Fertigungsprozessen oder dergleichen.

Nachstehend ist die Erfindung mit ihren ihr als wesentlich zugehörenden Einzelheiten anhand der Zeichnung in mehreren Ausführungsbeispielen näher beschrieben. Es zeigt in schematisierter und vergrößerter Darstellung:
Fig. 1 ein Fliess-Diagramm eines einfachen Beispieles einer Fliess-Injektions-Analyse-Anwendung mit einer Pumpe für Trägerflüssigkeit, einer Pumpe für eine Probe, einem Injektionsventil in die Leitung der Trägerflüssigkeit und einem Detektor,
Fig. 2 einen Bausatz gem. der Erfindung zur Verwirklichung des in Fig.1 gestrichelt umrandeten Bereiches, also des Injektionsventiles mit den Zu- und Abführleitungen,
Fig. 3 den Bausatz nach Fig.2 in gestapelter und zusammengesetzter Form,
Fig. 4 einen abgewandelten Bausatz, bei welchem die einzelnen Bauteile als verkleinerte Chips mit eingeäzten öffnungen ausgebildet sind, in ihrer Zuordnung zueinander und
Fig. 5 den Bausatz nach Fig.4 in zusammengesetzter und gestapelter Form,
Fig. 6 eine erfindungsgemäße Vorrichtung in schematisierter Darstellung, bei welcher außerhalb des Stapels von Bauteilen mit einer internen Pumpe, Leitungsteilen und einem Detektor Vorratsgefäße und Signalauswertungen schematisiert angedeutet sind,
Fig. 7 im Vergleich die Anordnung nach Fig.1 mit konventioneller Injektion und eine extern gesteuerte ventilfreie Lösung einer solchen Injektion mit zwei einander benachbarten T-Stücken,
Fig. 8a-Fig. 8d vier unterschiedlich stapelbare Bauteile eines erfindungsgemässen Bausatzes mit Durchführungen (a), einem Kanalabschnitt (b), einer zentralen Mischkammer (c) und einem Kanalsystem für die Injektion (d), wobei solche einzelnen unterschiedlichen Bauteile auch jeweils mehrfach vorgesehen sein können,
Fig. 9 in explosionsartiger Darstellung einen Stapel unterschiedlicher Bauteile mit Durchführungen, Verbindungskanälen, einem Rückschlagventil, einer durch eine flexible Membran gebildeten Pumpe, beidseits welcher Platten mit entsprechend Lochungen als Mischkammer oder dergleichen vorgesehen sind,
Fig. 10 den Bausatz nach Fig. 9 in zusammengefügtem Zustand zwischen zwei Anschlüsse aufweisenden Abschlußplatten,
Fig. 11 ein Ausführungsbeispiel in zusammengefügtem Zustand, bei welchem die Einzelplatten der besseren übersicht wegen nicht einzeln dargestellt sind, wobei sowohl eine Pumpe für Trägerflüssigkeit als auch eine Pumpe für die Probe vorgesehen sind,
Fig. 12 ein weiteres Ausführungsbeispiel einer aus stapelbaren, eine kreisrunde Außenkontur aufweisenden Bauteilen zusammengesetzte Vorrichtung mit noch mehr Leitungsabschnitten, Ventilen und Pumpen, geeignet für eine On-line-Glukose-Analyse,
Fig. 13a-Fig. 13h einen aus mehreren plattenförmigen Bauteilen bestehenden Bausatz von quadratischen, chipartigen Bauteilen mit unterschiedlichen Lochungen, Kanalabschnitten oder Systemen oder Mischkammern,
Fig. 14 ein als optischer Detektor geeignetes Bauteil mit einem Ein- und einem Auslaß zu einem von Spiegelflächen beidseits begrenzten Kanalabschnitt für die optische Untersuchung sowie
Fig. 15 ein Detektor-Bauteil für eine elektrochemische Analyse mit einem ionenselektiven Feldeffekttransistor beidseits eines zur elektrochemischen Untersuchung dienenden Kanalabschnittes.

Bei den nachfolgend beschriebenen Ausführungsbeispielen erhalten übereinstimmende Teile auch bei jeweils unterschiedlicher Gestaltung übereinstimmende Bezugsziffern, insbesondere die verschiedenen Ausführungsbeispiele einer Vorrichtung zur Aufbereitung oder Vorbereitung von flüssigen Proben für eine chemische Analyse sind jeweils mit 1 gekennzeichnet.

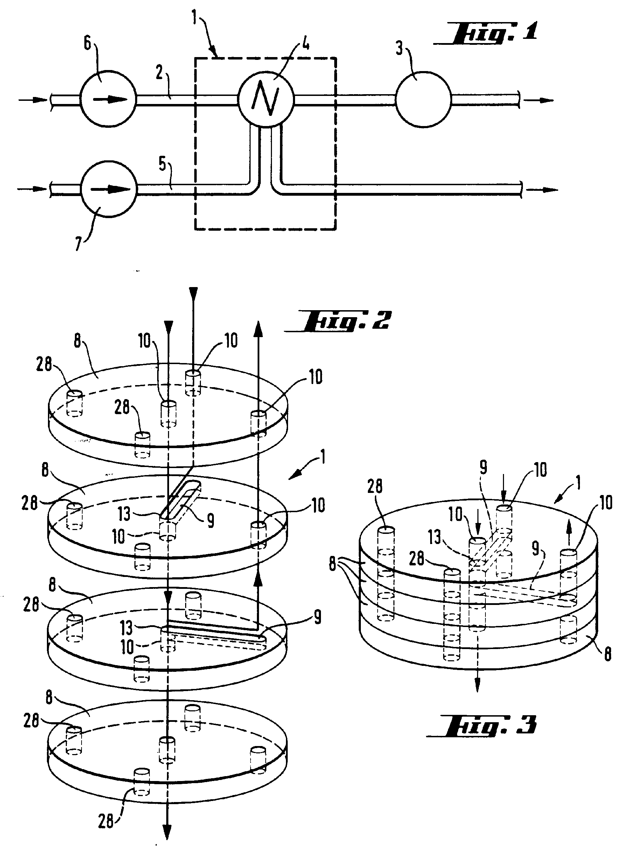

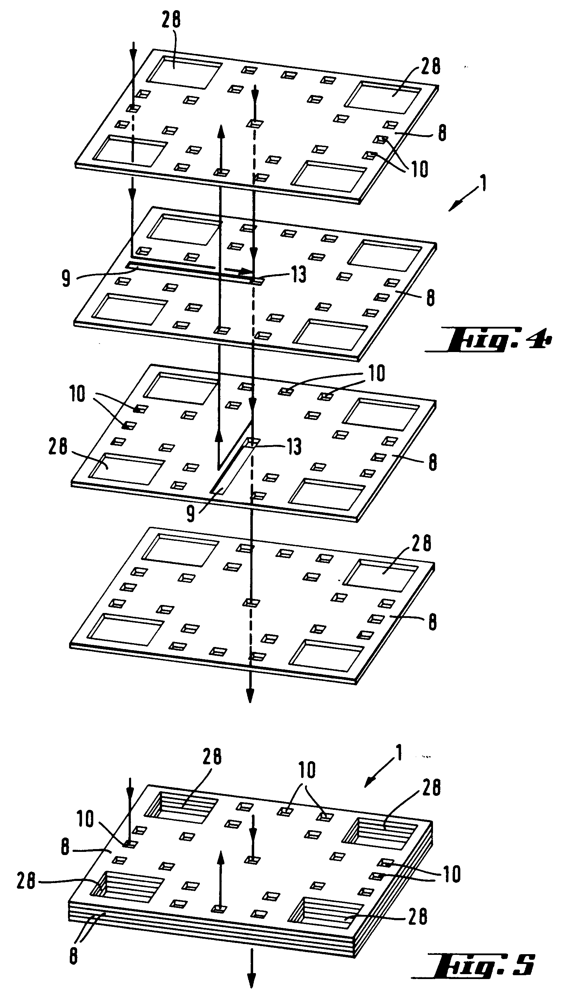

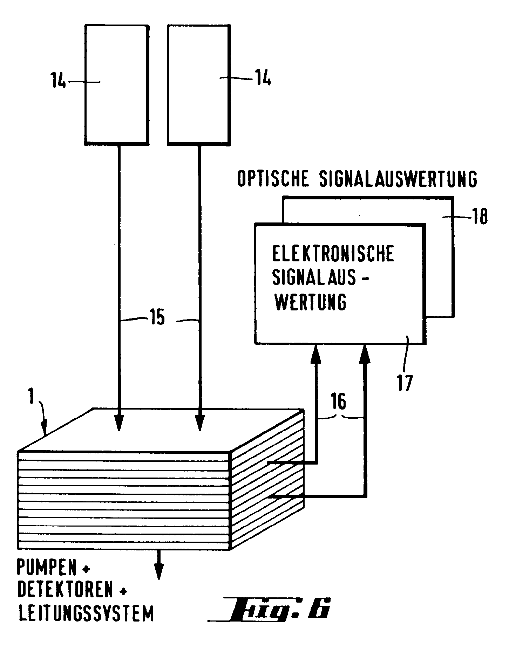

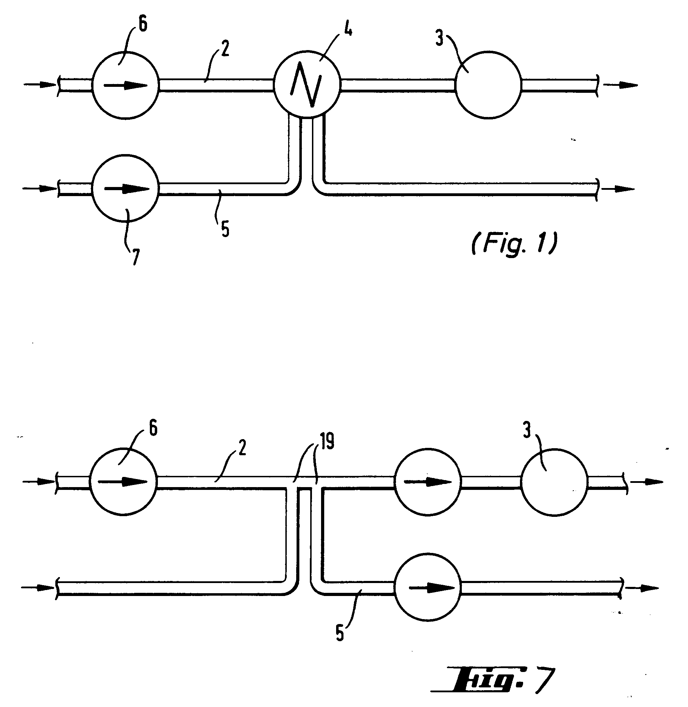

Fig. 1 zeigt ein einfaches Beispiel einer Fliess-Injektions-Analyse-Anwendung, bei welcher die Vorrichtung 1 zur Aufbereitung der flüssigen Probe im wesentlichen aus einer Zuleitung 2 zu einem Detektor 3, einem Injektionsventil 4 und einer Zuleitung 5 zu diesem Injektionsventil 4 besteht. Dabei erkennt man diese Anordnung als Schaltbild in Fig.1, wobei am Anfang der Zuleitungen 2 u.5 jeweils eine Pumpe 6 u.7 angeordnet sind, die in den nachfolgenden Ausführungsbeispielen innerhalb der Vorrichtung 1 integriert sind.

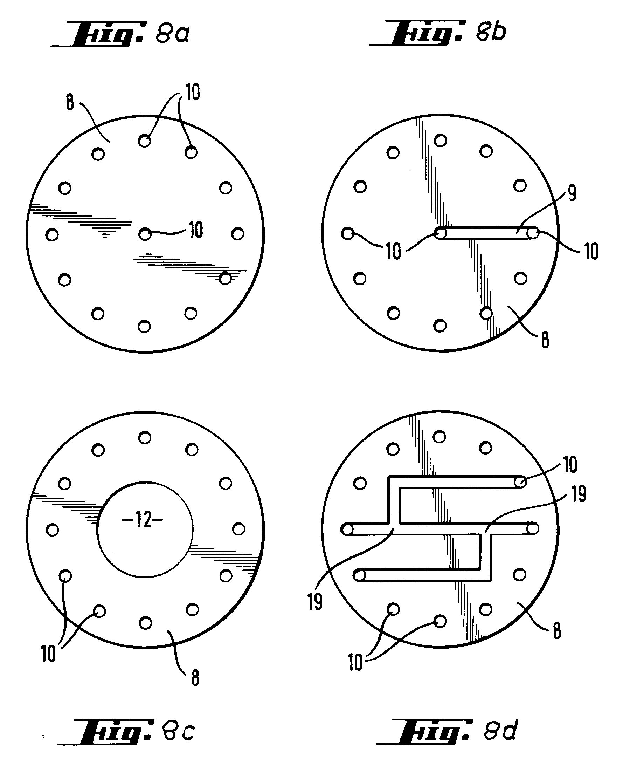

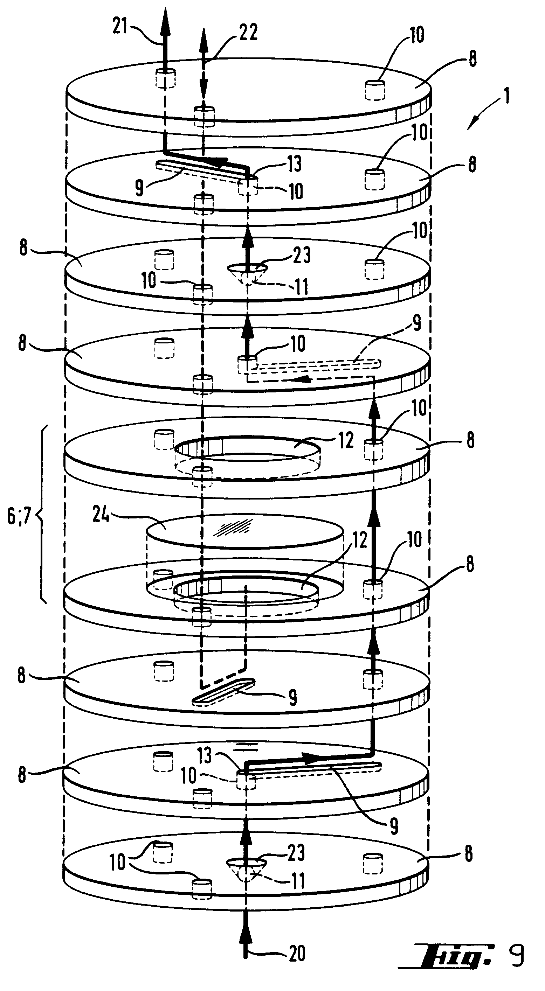

Sowohl diese sehr einfach aufgebaute Vorrichtung 1 gem.Fig.1 als auch die nachfolgend beschriebenen derartigen Vorrichtungen 1 mit mehr einzelnen Leitungsabschnitten oder Funktions-teilen sind gemäß den Fig.2 bis 5 und 8 bis 15 jeweils aus einem Stapel plattenförmiger Bauteile 8 zusammensetzbar. Dabei unterscheiden sich diese Bauteile 8 jeweils durch ihre Ausgestaltung bezüglich Leitungsteilen 9, Durchflußöffnungen 10, Ventilen 11 oder zentralen Kammern 12. Dennoch werden die Bauteile im folgenden alle mit "8" bezeichnet, da sie innerhalb eines Bausatzes einer Vorrichtung 1 eine übereinstimmende Außenkontur haben und deckungsgleich aufeinander stapelbar sind.

Die sehr einfache Ausgestaltung gem. den Fig.1 bis 5 zeigt bereits, daß die Bauteile 8 jeweils Leitungsstücke 9 und Verzweigungen 13 sowie Durchflußöffnungen 10 enthalten, um die Leitungen 2 u.5 an einer Injektionsstelle mit internem Volumen entsprechend dem Injektionsventil 4 zusammenzuführen, wonach die Leitung 5 wieder abgeführt wird, während die Leitung 2 zu einem externen Detektor weitergeführt sein kann. Schon bei diesem Ausführungsbeispiel wird also durch stapelbare Bauteile 8 an der Vorrichtung 1 gemäß Fig.1 ganz erheblich viel Platz und inneres Volumen eingespart, so daß entsprechend wenig Probeflüssigkeit und wenig Trägerflüssigkeit für die eigentliche Analyse benötigt wird.

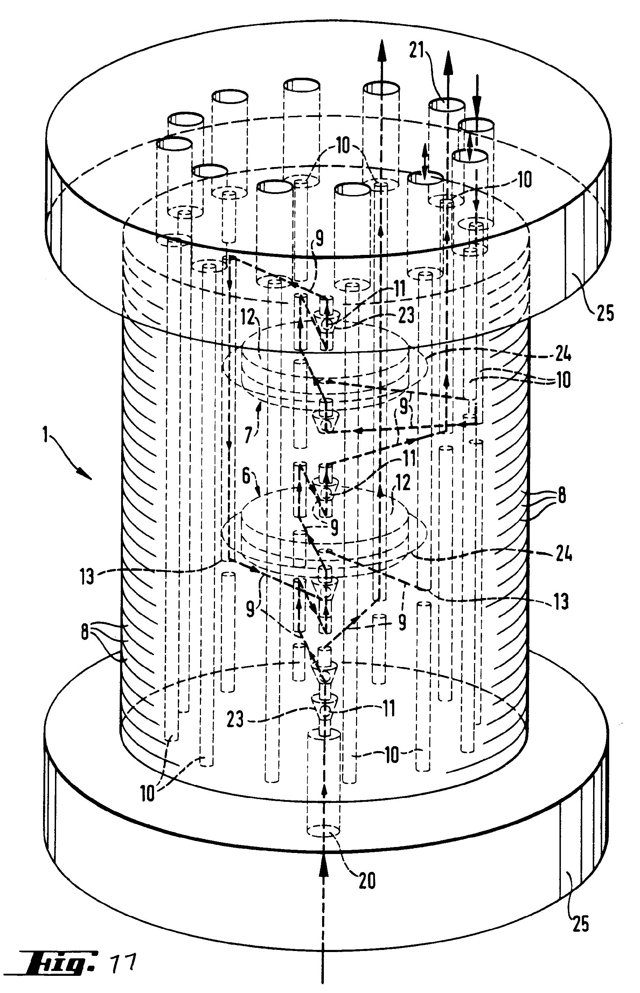

In Fig. 6 ist die Vorrichtung 1, die jeweils aus stapelbaren Bauteilen 8 mit unterschiedlichen Funktionen zusammengesetzt ist, lediglich als Block dargestellt. Es ist daran erkennbar, daß außerhalb der eigentlichen Vorrichtung 1 Vorratsgefäße 14 vorgesehen sein können, die über konventionelle Schläuche oder Leitungen 15 mit der Vorrichtung 1 verbunden sind, wobei in Fig.6 vorgesehen ist, daß Pumpen 6 u.7 in noch zu beschreibender Weise innerhalb der Vorrichtung 1 angeordnet sind.

Fig 6 zeigt außerdem Anschlüsse z.B. in Form elektrischer Kabel 16, womit die Vorrichtung 1 mit elektronischen Signalauswertungen 17 oder optischen Signalauswertungen 18 verbunden werden kann.

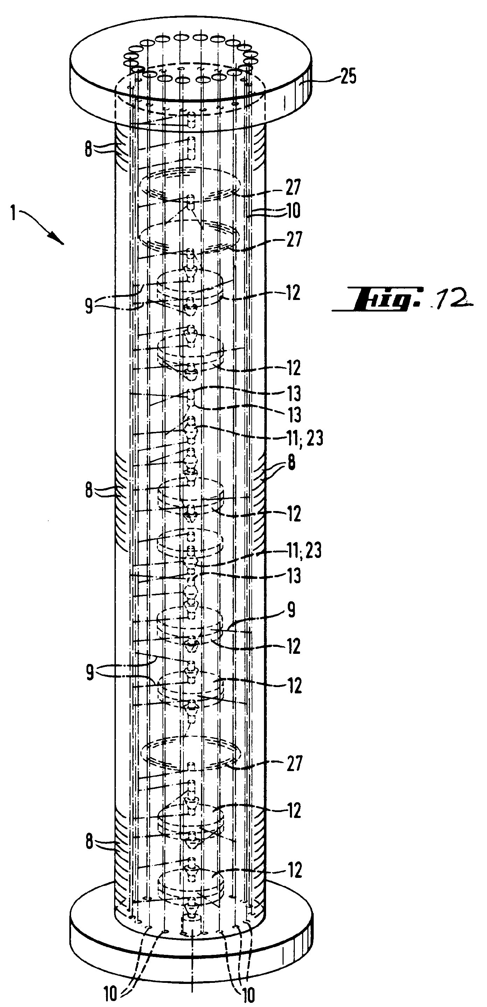

In Fig. 7 ist die Vorrichtung 1 gemäß Fig.1 mit einem Injektionsventil 4, einem Fliess-Diagramm einer solchen Vorrichtung 1 mit zwei hintereinander befindlichen T-Stücken 19 gegenübergestellt, wobei sowohl vor als auch hinter diesen T-Stücken 19 an der Leitung 2 eine Pumpe vorhanden ist, während aunerdem hinter dem zweiten T-Stück an der Abzweigleitung 5 ebenfalls eine Saugpumpe vorhanden ist, so daß durch die Ansteuerung all dieser Pumpen die gewünschte Injektion aus der Leitung 5 in die Leitung 2 durchgeführt werden kann.

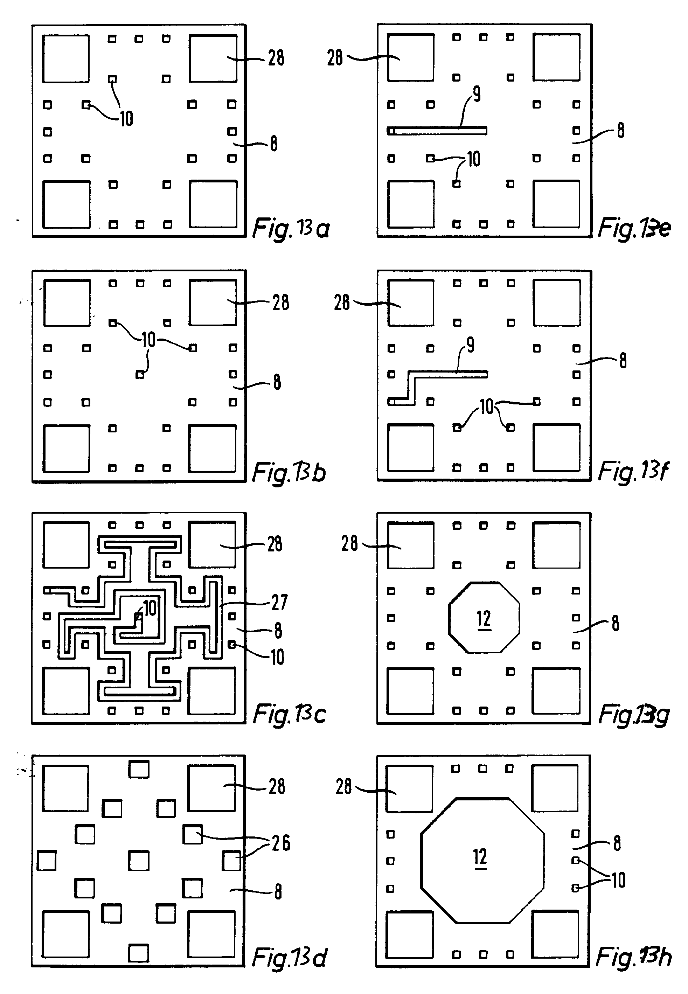

Fig. 8a-d, bei welcher ein Bauteil 8 lediglich Durchflussöffnungen 10, ein weiteres Bauteil 8 einen Kanal oder ein Leitungsstück 9, ein weiteres Bauteil ein zentrales Loch als Mischkammer 12 und vor allem ein letztes Bauteil 8 ein Kanalsystem mit zwei einander benachbarten T-Stücken 19 aufweisen.

In Fig. 9 u.10 ist eine Vorrichtung 1 dargestellt, bei welcher insgesamt neun plattenförmige Bauteile 8 zu einer Vorrichtung 1 gestapelt sind. Dabei zeigt Fig 9, daß in bestimmter Reihenfolge Bauteile 8 Durchflußöffnungen 10, Ventile 11, Kammern 12 und auch Verzweigungen 13 sowie Leitungsteile 9 enthalten, um von einem unteren Eintritt 20 zu einem Austritt 21 zu gelangen.

Etwa in der Mitte des Stapels von Bauteilen 8 gemäß Fig. 9 u.10 sind dabei zwei Bauteile mit zentralen Kammern 12 vorgesehen. Wird zwischen diese Bauteile 8 eine flexible Membran 24 eingefügt, kann diese als Pumpe 6 oder 7 benutzt werden, indem sie von einer Seite her mittels Druck oder Unterdruck ausgelenkt wird, so daß sie auf ihrer anderen Seite durch die Auslenkung eine entsprechende Pumpwirkung auf die Kammern 12 ausüben kann. In Fig. 9 ist die zur Bewegung einer solchen Membran dienende Druckleitung 22 gestrichelt angedeutet und führt ebenfalls über Durchflußöffnungen 10 und Leitungsteile 9 an den entsprechenden Bauteilen 8 zu der Betätigungskammer 12 unterhalb der flexiblen Membrane.

Dabei erkennt man ferner beispielsweise in dem untersten Bauteil 8 oder in dem dritten Bauteil von oben (in Fig. 9), daß zur Bildung eines Ventiles eine ein Bauteil durchsetzende Durchflußöffnung 23 zumindest bereichsweise über die Dicke des Bauteiles 8 trichterförmig ist und - was sich wegen der Kleinheit der Darstellung nur schematisch erkennen lässt - in ihrem sich verjüngenden Abschnitt ein kugeliges Ventilelement enthalten kann. Somit kann der Durchfluss nur in einer Richtung erfolgen, also ein solches Bauteil ein Rückschlagventil enthalten. Dadurch kann sichergestellt werden, dass die durch eine flexible Membrane 24 zwischen zwei Kammern 12 gebildete Pumpe in der gewünschten Förderrichtung wirksam ist. Dennoch werden keine zusätzlichen Schläuche und Funktionsteile mit grossem Platzbedarf benötigt, sondern diese Funktionen können innerhalb des Bausatzes der Vorrichtung 1 an plattenförmigen Bauteilen 8 oder zwischen diesen sehr platzsparend angeordnet werden. Fig. 10 gibt einen Eindruck davon, wie gering die gesamte Aussenabmessung der Vorrichtung 1 bei einem festen Verbinden der einzelnen plattenförmigen Bauteile 8 als zusammengehöriger Stapel ist, wobei der Bausatz dabei noch Abschlussscheiben 25 mit Anschlüssen als Eintritt 20 und Austritt 21 zu den Durchflusskanälen der Vorrichtung 1 aufweist. Solche Abschlussscheiben sind auch in den Ausführungsbeispielen nach Fig. 11 u. 12 erkennbar.

Fig.11 zeigt dabei eine Ausführungsform, in welcher in der vorbeschriebenen Weise zwei Pumpen, nämlich eine Pumpe 6 für Trägerflüssigkeit und eine Pumpe 7 für die Probe innerhalb einer Vorrichtung 1 aus gestapelten plattenförmigen Bauteilen untergebracht sind, wobei diese Pumpen 6 u.7 wiederum durch jeweils zwei Platten mit Kammern 12 und dazwischen befindlicher Membran gebildet sind. Entsprechend mehr Ein- und Auslässe für die Pumpensteuerung bzw. Pumpenbetätigung sind an der oberen Abschlußscheibe 25 vorgesehen. Dennoch ergibt sich auch bei dieser erweiterten Vorrichtung 1 gem. Fig.11 insgesamt ein sehr geringer Platzbedarf innerhalb des Stapels von Bauteilen 8 mit einem entsprechend geringen inneren Gesamtvolumen.

Durch Fig.12 wird verdeutlicht, daß die Zahl der plattenförmigen Bauteile 8 mit unterschiedlichen Funktionsteilen weiter vergrößert werden kann, um z.B. einen Glukose-Analysator in der erfindungsgemäßen Weise aufzubauen.

Manche der Bauteile 8 kommen dabei mehrfach vor, wobei vor allem solche Bauteile 8 mit peripheren Durchflußöffnungen 10 mehrfach Verwendung finden können, indem sie je nach Verlauf der Gesamtleitung so gegeneinander verdreht sein können,daß sie die entsprechenden Verbindungen zu Leitungsteilen 9 in parallelen Bauteilen 8 herstellen können, damit insgesamt ein durchgehender Leitungsstrang vom Eintritt 20 bis zum Austritt 21 entsteht, wie es auch schon bei Fig.11 in einer etwas einfacheren Version einer Vorrichtung 1 verwirklicht ist.

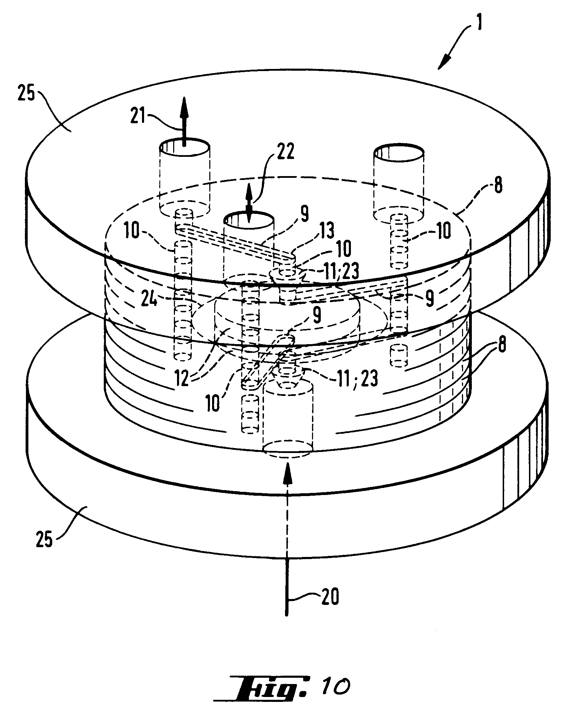

Während bei den Ausführungsbeispielen nach Fig. 2, 3 und 8a-d bis 12 die plattenförmigen Bauteile 8 eine kreisrunde Aussenkontur haben und beispielsweise Glas-, Kunststoff- oder Metallscheiben mit etwa 50 mm oder auch einem grösseren Durchmesser sind, zeigen die Ausführungsbeispiele gem. Fig. 4 und 5 sowie 13a-h bis 15 analog verwendbare und zusammensetzbare plattenförmige Bauteile 8, die chipartig von einem Kristall abgetrennte Scheiben sind und somit eine noch geringere Außenabmessung haben können, weil die an ihnen vorhandenen Lochungen, Kanalabschnitte und dergleichen im Äzverfahren angebracht sein können. Diese Bauteile 8 haben im Ausführungsbeispiel eine quadratische Außenkontur.

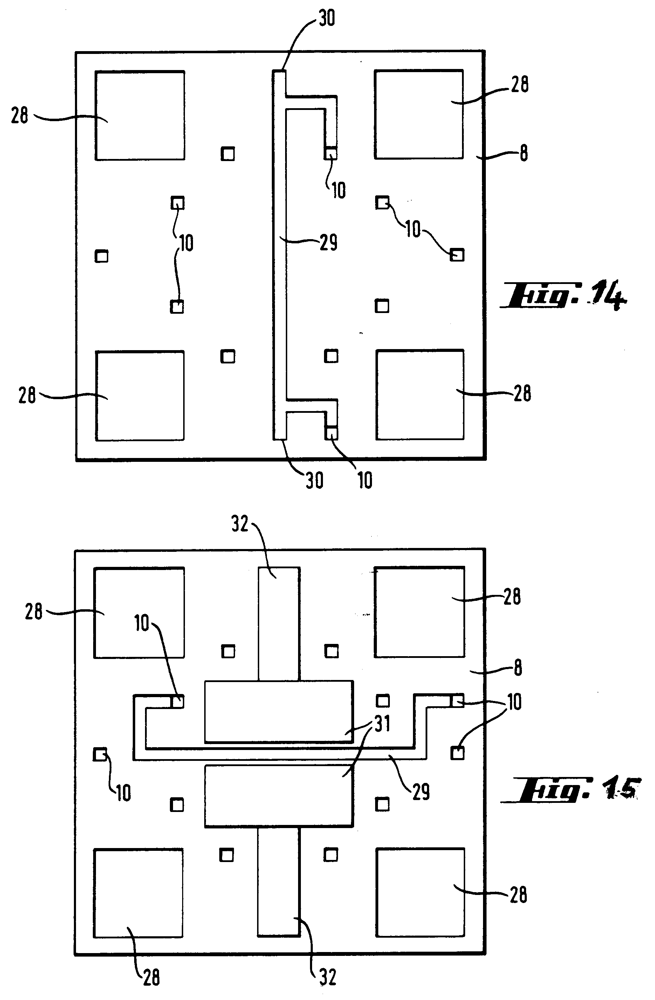

Vor allem in dem in Fig. 13a-h dargestellten Beispiel eines Bausatzes, dessen Einzelteile jeweils mehrfach vorhanden sein können, erkennt man wiederum Leitungsteile 9, Durchflussöffnungen 10 oder Kammern 12, unterschiedlicher Grössen, die Mischkammern oder auch Pumpelemente sein können. Darüberhinaus ist in dem in Fig. 13d dargestellten Bauteil 8 angedeutet, dass Adapter 26 für die Halterung von Glaskapillaren vorgesehen sein können, mit denen eine Zufuhr von Proben und dergleichen durchführbar ist. Ferner erkennt man in Fig. 13c gewundene Kanäle 27, die mit der schon erwähnten Äztechnik auch in sehr engen Windungen auf einem sehr kleinen Bauteil untergebracht werden können, also die Möglichkeit geben, durch zahlreiche Biegungen und Windungen auf engstem Raum einen Mischeffekt zu erzielen. Solche gewundenen Kanäle 27 zeigt auch Fig.12.
Bei all diesen Bauteilen 8 der Fig.13 erkennt man ebenso wie bei den demgegenüber vergrößert dargestellten Bauteilen 8 der Figuren 14 u.15 in allen vier Ecken Positionierlöcher 28, die auch bei den runden Scheiben vorhanden sein können, um eine lagerichtige Fixierung der gestapelten Bauteile sicherzustellen, aber auch eine Zuordnung der Bauteile in gegeneinander verdrehter Position zu erlauben.

Fig.14 ist dabei ein Bauteil 8, welches einen Einlaß und einen Auslaß zu einem Kanalabschnitt 29 hat, der an seinen beiden Enden 30 verspiegelt ist, um so eine optische Detektorzelle zu bilden.

Bei Fig. 15 ist beidseits eines vergleichbaren, wiederum Ein-und Auslaß aufweisenden Kanalabschnittes 29 ein ionenselektiver Feldeffekttransistor 31 angeordnet, wodurch dieses Bauteil 8 zu einer elektrochemischen Detektorzelle wird. Die Anschlüsse 32 dieses Transistors 31 können ebenso wie dieser selbst auf einfache Weise in der bekannten Halbleiterbauweise angebracht sein.

Da die einander gegenüberliegenden Oberflächen der plattenförmigen Bauteile 8 jeweils planparallel und eben sind, können sie in der geschichteten und verbundenen Gebrauchslage jeweils die Ränder der Durchflußöffnungen 10 oder auch von Kanälen oder Kanalabschnitten 29, 27 oder 9 sowie die Kammern 12 abdichten. Es ergibt sich also durch die Stapelung eine Vorrichtung 1, bei der die einzelnen Leitungsbereiche und Funktionsteile dicht sind und keine zusätzlichen Dichtungen erforderlich machen. Zum dichten Zusammendrücken der gestapelten plattenförmigen Bauteile 8 können in nicht näher dargestellter Weise die Verbindungs- oder Positionierlochungen 28 durchsetzende Gewindestäbe oder Schrauben vorgesehen sein.

Somit ergeben sich Vorrichtungen 1 von äußerst geringer Aussenabmessung, die dennoch alle erforderlichen Elemente enthalten, um eine Fliess-Injektions-Analyse vorbereiten und durchführen zu können, wobei aufgrund der Miniaturisierung nur sehr geringe Mengen an Trägerflüssigkeit und Probe benötigt werden und aufgrund der Verkürzung der Fliess-Strecken die Analysegeschwindigkeit erheblich gesteigert wird.

Die Vorrichtung 1 zur Aufbereitung oder Vorbereitung von flüssigen Proben für eine vorzugsweise quantitative chemische Analyse, insbesondere zur Fliess-Injektions-Analyse ist zur Miniaturisierung und Verminderung des erforderlichen Probenvolumens bei gleichzeitiger Verkürzung der Analysezeit aus einem Satz plattenförmiger Bauteile 8 zu einem Stapel zusammengesetzt, wobei die Bauteile 8 jeweils Leitungsstücke 9 und/oder Verzweigungen 13 und/oder Mündungen und/oder Ventile, z.B. Rückschlagventile und Pumpen 6,7 enthalten, um Trägerflüssigkeit und Probe einem Detektor 3 in gewünschter Weise zuführen zu können. Dabei können je nach Erfordernis der Analyse die Bauteile 8 mit den in ihnen enthaltenen Leitungen und Funktionsteilen in unterschiedlicher Anzahl und/oder Reihenfolge und/oder gegenseitiger Winkelorientierung stapelbar und in Gebrauchsstellung dicht verbunden sein.

## Patentansprüche

1. Vorrichtung zur Aufbereitung oder Vorbereitung von flüssigen Proben für eine chemische Analyse mit Zuführkanälen oder -leitungen zu einer Analysevorrichtung oder einem Detektor, wobei wenigstens eine Leitung für ein Trägermedium und wenigstens eine weitere Leitung zur Zuführung einer zu untersuchenden Probe vorgesehen sind, die in die Zuleitung für das Trägermedium mündet, wobei die Vorrichtung (1) aus einem Satz plattenförmiger Bauteile (8) modular zu einem Stapel zusammensetzbar ist, und die Bauteile (8) jeweils Leitungsstücke (9), Verzweigungen (13) und/oder Mündungen enthalten, dadurch gekennzeichnet, dass die aus übereinandergestapelten Bauteilen (8) modular zusammengesetzte Vorrichtung (1) wenigstens eine integrierte Pumpe aufweist, die durch eine zwischen zwei Bauteilen (8) angeordnete Membran (24) gebildet ist, welche von einer Seite her mittels Druck und/oder Unterdruck auslenkbar ist und auf ihrer anderen Seite mit Ansaug- und Druckleitungen für ein zu pumpendes Medium in Verbindung steht.

2. Vorrichtung nach Anspruch 1, dadurch gekennzeichnet, dass wenigstens ein Bauteil (8) ein oder mehrere Ventile (11) enthält.

3. Vorrichtung nach Anspruch 1 oder 2, dadurch gekennzeichnet, daß die Bauteile (8) zum Aufbau unterschiedlicher Fliess-Systeme und Leitungen in unterschiedlicher Anzahl und/oder Reihenfolge und/oder gegenseitiger Orientierung stapelbar und in Gebrauchsstellung dicht verbunden sind.

4. Vorrichtung nach einem der Ansprüche 1 bis 3, dadurch gekennzeichnet, daß jeweils ein plattenförmiges Bauteil (8), Zusätzlich zur integrierten Pumpe, wenigstens ein Ventil (11), oder eine Mischkammer (12), oder ein Pumpenelement (6, 7), oder Extraktoren, oder Reaktoren, oder Verbindungsstücke und/oder Detektorzellen, insbesondere photooptische, elektrochemische, elektrophoretische oder chromatographische Detektorzellen oder dergleichen oder ein anderes Funktionsteil der Vorrichtung aufweist.

5. Vorrichtung nach Anspruch 4, dadurch gekennzeichnet, daß das an dem plattenförmige Bauteil (8) vorgesehene Funktionsteil in dessen Zentrum angeordnet ist und Zu- und Abflußkanäle oder dergleichen Durchführungsöffnungen (10) dem Rand oder der Peripherie des Bauteiles (8) näher liegen.

6. Vorrichtung nach einem der Ansprüche 1 bis 5, dadurch gekennzeichnet, daß der Anschluß an ein Steuergerät über elektrische Kabel, insbesondere für Detektor, Pumpe und/ öder Ventile, über hydraulische und/oder pneumatische Schlauchleitungen, zum Beispiel für Pumpen oder Ventile, oder über Reagenzzuführungs-Schläuche und optische Fasern, insbesondere zu einem auf der Durchleuchtung mit Licht basierenden Detektor, erfolgt.

7. Vorrichtung nach einem der Ansprüche 1 bis 6, dadurch gekennzeichnet, daß die einzelnen Bauteile Zentrier-, Positionier- oder Verbindungslochungen (28) oder Aussparungen an jeweils übereinstimmender Stelle haben.

8. Vorrichtung nach einem der Ansprüche 1 bis 7, dadurch gekennzeichnet, daß jedes Bauteil (8) entlang seinem Umfang mehrere, beispielsweise vier Zentrier- oder Verbindungslochungen für Befestigungsmittel aufweist, die jeweils um einen übereinstimmenden Winkel gegeneinander versetzt sind und auf übereinstimmendem Abstand vom Zentrum des Bauteiles angeordnet sind.

9. Vorrichtung nach einem der Ansprüche 1 bis 8, dadurch gekennzeichnet, daß die Außenkonturen der Bauteile (8) übereinstimmen und von gleicher Größe sind, so daß die Bauteile deckungsgleich sind.

10. Vorrichtung nach Anspruch 9, dadurch gekennzeichnet, daß die Außenkontur der Bauteile (8) kreisrund oder quadratisch ist.

11. Vorrichtung nach einem der Ansprüche 1 bis 10, dadurch gekennzeichnet, daß die plattenförmigen Bauteile (8) Glas-, Kunststoff- oder Metallscheiben, insbesondere Edelstahlscheiben sind.

12. Vorrichtung nach einem der Ansprüche 1 bis 10, dadurch gekennzeichnet, daß die plattenförmigen Bauteile (8) chipartige, von einem Kristall abgetrennte Scheiben sind.

13. Vorrichtung nach einem der Ansprüche 4 bis 12, dadurch gekennzeichnet, daß die Durchflußöffnungen, -kanäle und/oder Verbindungslochungen und/oder Aussparungen für Funktionsteile in die Bauteile (8) eingeäzt sind.

14. Vorrichtung nach einem der Ansprüche 1 bis 13, dadurch gekennzeichnet, daß die einander gegenüberliegenden Oberflächen der plattenförmigen Bauteile (8) planparallel und derart eben sind, daß sie in geschichteter und verbundener Gebrauchsstellung die Rändern der Durchflußöffnungen (10) und dergleichen oder an der Oberfläche einseitig offener Kanalabschnitte (9,27,29) abdichten.

15. Vorrichtung nach einem der Ansprüche 1 bis 14, dadurch gekennzeichnet, daß zur Bildung eines Ventiles eine ein Bauteil (8) durchsetzende Durchflußöffnung (23) zumindest bereichsweise über die Dicke des Bauteiles (8) trichterförmig ist und in dem sich trichterförmig verjüngenden Abschnitt ein kugeliges Ventilelement enthält.

16. Vorrichtung nach einem der Ansprüche 7 bis 15, dadurch gekennzeichnet, daß zum dichten Zusammendrücken der gestapelten plattenförmigen Bauteile (8) die Verbindungslochungen (28) durchsetzenden Gewindestäbe oder schrauben vorgesehen sind.

17. Vorrichtung nach einem der Ansprüche 1 bis 16, dadurch gekennzeichnet, daß der Bausatz Abschlußscheiben (25) mit Anschlüssen zu den Durchflußkanälen aufweist.

## Claims

1. An apparatus for processing or preparing liquid samples for chemical analysis, comprising feed channels or feed pipes leading to an analysis apparatus or a detector, there being provided at least one pipe for a carrier medium and at least one further pipe for feeding a sample to be investigated, which pipe leads into the feed pipe for the carrier medium, it being possible for the apparatus (1) to be assembled in modular manner from a set of plate-like components (8) to form a stack, and each of the components (8) comprising pipe pieces (9), branches (13) and/or orifices, wherein the apparatus (1) assembled in modular manner from components (8) stacked one above the other comprises at least one integrated pump that is formed by a diaphragm (24) arranged between two components (8), which diaphragm can be deflected from one side by means of pressure and/or reduced pressure and is connected on its other side to suction and pressure pipes for a medium to be pumped.

2. An apparatus according to claim 1, wherein at least one component (8) comprises one or more valves (11).

3. An apparatus according to claim 1 or 2, wherein the components (8) can be stacked in varying number and/or sequence and/or orientation relative to one another to construct different flow systems and flow pipes and, in the operative position, are connected in a sealing manner.

4. An apparatus according to any one of claims 1 to 3, wherein one plate-like component (8) in each case, in addition to the integrated pump, comprises at least one valve (11), or a mixing chamber (12), or a pump element (6, 7), or extractors, or reactors, or connecting pieces and/or detector cells, especially photo-optical, electrochemical, electrophoretic or chromatographic detector cells or the like or another functional part of the apparatus.

5. An apparatus according to claim 4, wherein the functional part provided on the plate-like component (8) is arranged in the centre of that component, and feed and discharge channels or the like feedthrough openings (10) are arranged nearer to the edge or the periphery of the component (8).

6. An apparatus according to any one of claims 1 to 5, wherein the connection to a control device is effected via electrical cables, especially in the case of a detector, a pump and/or valves, via hydraulic and/or pneumatic hoses, for example in the case of pumps or valves, or via feed hoses for reagents, and via optical fibres, especially to a detector operating on the principle of transillumination with light.

7. An apparatus according to any one of claims 1 to 6, wherein the individual components comprise centring, positioning or connecting holes (28) or recesses at coinciding sites.

8. An apparatus according to any one of claims 1 to 7, wherein each component (8) comprises along its periphery several, for example four, centring or connecting holes for securing means which are offset with respect to one another by identical angles and are arranged at identical distances from the centre of the component.

9. An apparatus according to any one of claims 1 to 8, wherein the outer contours of the components (8) are identical and of equal size so that the components coincide.

10. An apparatus according to claim 9, wherein the outer contour of the components (8) is circular or square.

11. An apparatus according to any one of claims 1 to 10, wherein the plate-like components (8) are glass, plastics or metal wafers, especially refined steel wafers.

12. An apparatus according to any one of claims 1 to 10, wherein the plate-like components (8) are chip-like wafers cut from a crystal.

13. An apparatus according to any one of claims 4 to 12, wherein the flow openings, flow channels and/or connecting holes and/or recesses for functional parts are etched into the components (8).

14. An apparatus according to any one of claims 1 to 13, wherein the mutually opposing surfaces of the plate-like components (8) are plane-parallel and so even that, in the layered and connected operative position, they seal the edges of the flow openings (10) and the like or seal at the surface of channel sections (9, 27, 29) that are open at one side.

15. An apparatus according to any one of claims 1 to 14, wherein, in order to form a valve, a flow opening (23) extending through a component (8) is funnel-shaped across the thickness of the component (8), at least in regions, and contains a spherical valve member in the section tapering in the form of a funnel.

16. An apparatus according to any one of claims 7 to 15, wherein, for pressing the stacked plate-like components (8) together in a sealing manner, threaded rods or screws that extend through the connecting holes (28) are provided.

17. An apparatus according to any one of claims 1 to 16, wherein the assembly of components comprises closing wafers (25) having connections to the flow channels.

## Revendications

1. Dispositif de mise en état ou de préparation d'échantillons liquides pour l'analyse chimique, ce dispositif comportant des canaux d'alimentation, ou conduits d'alimentation, menant à un dispositif d'analyse ou à un détecteur, au moins un conduit pour transporter le véhicule fluide et au moins un autre conduit destiné au transport d'un échantillon à analyser et débouchant dans le conduit d'alimentation en véhicule fluide, étant prévus, le dispositif (1) pouvant être assemblé de façon modulaire à partir d'un jeu de pièces constitutives (8) en forme de plaques, pour former un empilement, et les pièces constitutives (8) comportant chacune des tronçons de conduits (9), des ramifications (13) et/ou des embouchures, caractérisé en ce que le dispositif (1) constitué de façon modulaire de pièces constitutives (8) empilées les unes au-dessus des autres, présente au moins une pompe intégrée qui est formée par une membrane, disposée entre deux pièces constitutives (8), qui peut être déformée à partir d'un côté au moyen d'une pression et/ou d'une dépression et qui est reliée de son autre côté à des conduits d'aspiration et de pression destinés à transporter un fluide qui doit être pompé.

2. Dispositif selon la revendication 1, caractérisé en ce qu'au moins une pièce constitutive (8) contient une ou plusieurs valves (11).

3. Dispositif selon la revendication 1 ou 2, caractérisé en ce que les pièces constitutives (8) peuvent être empilées en vue de la constitution de systèmes d'écoulement différents et de conduits en nombre différent et/ou en ordre différent et/ou dans une orientation mutuelle différente, et en ce qu'elles sont reliées de façon étanche lorsqu'elles sont en position d'utilisation.

4. Dispositif selon l'une des revendications 1 à 3, caractérisé en ce que chacune des pièces constitutives (8) en forme de plaques présente, en plus de la pompe intégrée, au moins une valve (11), ou une chambre de mélangeage (12) ou un élément de pompe (6, 7), ou des extracteurs, ou des réacteurs, ou des pièces de liaison et/ou des éléments de détection en particulier des éléments de détection photo-optiques, électrochimiques, travaillant par électrophorèse, ou chromatographiques ou similaires, ou une autre partie fonctionnelle du dispositif.

5. Dispositif selon la revendication 4, caractérisé en ce que la partie fonctionnelle prévue sur la pièce constitutive (8) est disposée au centre de celle-ci et en ce que des canaux d'alimentation et des canaux d'évacuation, ou des orifices (10) de passage similaires sont situés plus près du bord, ou de la périphérie, de la pièce constitutive (8).

6. Dispositif selon l'une des revendications 1 à 5, caractérisé en ce que le raccordement à un appareil de commande s'effectue par l'intermédiaire de câbles électriques, en particulier pour le détecteur, la pompe et/ou les valves, par l'intermédiaire de conduits en tuyau souple hydrauliques et/ou pneumatiques, par exemple pour les pompes ou les valves, ou par l'intermédiaire de tuyaux souples d'alimentation en réactif et de fibres optiques, en particulier en ce qui concerne un détecteur dont le fonctionnement est basé sur l'éclairage au moyen d'une lumière.

7. Dispositif selon l'une des revendications 1 à 6, caractérisé en ce que les pièces constitutives individuelles comportent, à des emplacements qui se correspondent dans chaque cas, des trous (28) ou cavités de centrage, de positionnement ou de liaison.

8. Dispositif selon l'une des revendications 1 à 7, caractérisé en ce que chaque pièce constitutive (8) présente sur sa périphérie plusieurs, par exemple quatre, trous de centrage ou de liaison destinés à des moyens de fixation qui sont décalés chacun par rapport aux autres d'un angle qui coïncide exactement, et à une distance du centre de la pièce constitutive qui coïncide exactement.

9. Dispositif selon l'une des revendications 1 à 8, caractérisé en ce que les contours extérieurs des pièces constitutives (8) se correspondent exactement et ont la même dimension, si bien que les pièces constitutives se recouvrent exactement.

10. Dispositif selon la revendication 9, caractérisé en ce que le contour extérieur des pièces constitutives (8) est rond ou carré.

11. Dispositif selon l'une des revendications 1 à 10, caractérisé en ce que les pièces constitutives (8) en forme de plaques sont des disques en verre, en matière plastique, ou en métal, en particulier des disques en acier spécial.

12. Dispositif selon l'une des revendications 1 à 10, caractérisé en ce que les pièces constitutives (8) en forme de plaques sont des disques du genre de micro-plaquettes détachées d'un cristal.

13. Dispositif selon l'une des revendications 4 à 12, caractérisé en ce que les orifices de passage, les canaux de passage et/ou les trous de liaison et/ou les cavités destinées aux pièces fonctionnelles sont réalisées par morsure à l'acide dans les pièces constitutives (8).

14. Dispositif selon l'une des revendications 1 à 13, caractérisé en ce que les surfaces situées face à face des pièces constitutives (8) en forme de plaques sont planes et parallèles de façon telle qu'en position d'empilage et de liaison, les bords des orifices de passage (10) et similaires, ou les tronçons (9, 27, 29) de canal ouverts d'un côté vers la surface, sont étanchéifiés.

15. Dispositif selon l'une des revendications 1 à 14,caractérisé en ce que, en vue de réaliser une valve, un orifice de passage (23) traversant une pièce constitutive (8) a une forme d'entonnoir au moins sur une certaine zone de l'épaisseur de la pièce constitutive et contient un élément de valve en forme de bille dans sa partie qui se rétrécit en forme d'entonnoir.

16. Dispositif selon l'une des revendications 7 à 15, caractérisé en ce que sont prévues des tiges filetées ou des vis traversant les trous de liaison (28) en vue de serrer de façon étanche les pièces constitutives (8) en forme de plaques.

17. Dispositif selon l'une des revendications 1 à 16, caractérisé en ce que l'ensemble de structure comporte des disques terminaux (25) dotés d'éléments de raccordement aux canaux d'écoulement.
